# EUROPEAN PATENT APPLICATION

(11) **EP 4 646 922 A2**
(43) Date of publication of application: **12.11.2025**
(21) Application number: 25196161.1
(22) Date of filing: 20.12.2021
(51) Int. Cl.: A01J 25/00

(54) **PROCESS FOR PREPARING VEGAN CHEESE PRODUCT AND VEGAN CHEESE PRODUCT OBTAINED BY SAID PROCESS**

(62) Divisional of application: 21216072.5
(71) Applicant: Bühler AG, 9240 Uzwil (CH)
(72) Inventor: Kern, Christian, 70567 Stuttgart (DE); Mitchell, William Robert, 8050 Zürich (CH)
(74) Representative: Hepp Wenger Ryffel AG

(57) **Abstract**

The present invention is related to a process for preparing a vegan cheese product, comprising the steps of metering raw materials into an extruder, comprising 5-50 wt.-% starch, 0-50 wt.-% of at least one component that provides a fat phase mimicking the thermal behavior of milk fat, preferably a vegetable oil, and 30-70 wt.-% water, wherein all amounts are based on the entire amount of the raw materials, mixing and processing said raw materials in said extruder, extruding and cooling the resulting extrudate so as to obtain the vegan cheese product, wherein in said extruder strain conditions of 300-3000 WATS, preferably 1000 to 3000 WATS are applied. The present invention is also related to vegan cheese product obtainable by said process.

## Description

The present invention is related to a process for preparing vegan cheese product by extrusion, and vegan cheese product obtained by said process.

Innovative food products, such as products that imitate properties of meat and fish and their role in diets, that are based on vegetable proteins are becoming increasingly important as part of the sustainability trend. This also includes the development of plant-based dairy products such as vegan cheese. Vegan cheese is a product in which no milk or milk component like milk proteins (caseins and whey proteins) or milk sugar (lactose) are present. Vegan cheese however, could contain caseins or whey proteins derived from non-animal cells through recombinant DNA technology.

A plant-based vegan cheese product has to meet several conditions. It has to provide a functionality (such as sliceability, stretchability, and melting behavior) as well as taste and aroma that correspond to milk-based cheese products.

In milk-based cheese products, the typical functionality is provided by casein-casein interactions, primarily non-covalent interactions. Weakening of these interactions upon heating results in the typical stretch and flow behavior of cheese.

Matching the functionality of casein in cheese using plant-based proteins has proven to be extremely challenging.

Cheese analogues available on the market are mainly composed of starch and fat, with low levels of protein compared to dairy cheese. This is unfavorable with respect to the nutritional quality of the product. Also known are cashew-based cheeses, which however do not display the typical functionality of dairy cheese.

So far there has not been developed a vegan plant-based cheese product that is fully satisfactory with respect to its functionality. In particular, such starch-based cheese alternatives lack the desired chemical composition (nutritional value), taste, or odor of dairy cheese.

In WO 2021/113985 A1, a vegan cheese product is described that is based on a plant prolamin combined with a fat and a structural component. The prolamin may be selected from the group consisting of gliadin, hordein, secalin, zein, kafirin, avenin, or combinations thereof. The fat may be a vegetable oil. The structural agent may be selected from the group consisting of a starch, a microbial or vegetable gum, a protein, a sugar polymer, and mixtures thereof.

The vegan cheese product of WO 2021/113985 A1 is prepared by combining the structural component with water, heating, preferably in a batch-cooker, adding the other components, and cooling the thus obtained blend to provide the cheese product.

In WO 2021/113985 A1, a composition containing 30% zein protein was considered advantageous. In said composition, there was a ratio of starch to fat of 2:1, with a low amount of fat (1.5%). This is much lower than the fat content in milk-based dairy cheese (typically more than 10%).

While this product was described as having a functionality that resembles the functionality of dairy cheese much more than starch-based vegan cheese products, it has been found quite challenging to obtain a homogeneous blend with a high amount of zein protein (e.g. 30%). It was found to be very difficult to modify the described composition in order to improve the product characteristics. For example, the addition of a fat phase was quite challenging, especially with more than 5% of fat phase. Vegan cheese products obtained by the method described in WO 2021/113985 A1 and containing 30% zein protein were still not satisfactory in their functionality in that they were too hard and brittle.

In EP-2 168 429 A1, the manufacture of milk-based mozzarella by an extrusion method with addition of a salt into the extruder was described. Said method is limited to the manufacture of mozzarella from a cheese-like precursor product, i.e. cagliata.

It was the problem of the present invention to provide a process for manufacturing a vegan cheese product that is easier to carry out and to modify, and that yields a vegan cheese product having improved characteristics as compared to known vegan cheese products, in particular starch-based vegan cheese products.

The above problem is solved by the process and product as defined in the claims.

In detail, the present invention is related to a process for preparing a vegan cheese product, comprising the steps:
a) Metering raw materials into an extruder, preferably a twin-screw extruder, said raw materials comprising 5-50 wt.-% zein protein or starch, 0-50 wt.-% of at least one component that provides a fat phase mimicking the thermal behavior of milk fat, preferably a vegetable oil, and 30-70 wt.-% water, wherein all amount are based on the entire amount of the raw materials, and optionally an additive selected from the group consisting of a plasticizer, a surfactant, and acid, a calcium salt, and combinations thereof,
b) Mixing and processing said raw materials in said extruder,
c) Extruding the resulting extrudate so as to obtain the vegan cheese product, wherein in said extruder strain conditions of 300-3000 WATS, preferably 1000 to 3000 WATS, are applied.

According to the present invention, it has been surprisingly found that vegan cheese products can be favorably manufactured with an extruder under specific strain conditions. Blends of raw materials that could be not processed at all, or only proceed under significant difficulties, into a vegan cheese product when using a conventional method such as described in WO 2021/113985 A1, could be processed into a vegan cheese product much easier by a specific extrusion process. It was found that different qualities of vegan cheese products, in particular based on zein protein, could be obtained by applying a strain conditions of 300-3000 WATS, preferably 1000 to 3000 WATS (with the preferred conditions being especially suitable for making mozzarella/pasta-filata cheese products) in the extruder. According to a preferred embodiment, a specific configuration of screw elements can be used to realize the above strain conditions in the extruder, e.g. a configuration in which 0-20, preferably 0-10 kneading block screw elements and 0-20, preferably 3-10 reverse screw elements are used, wherein for realizing lower strain conditions as few kneading block screw elements and reverse elements should be used, more preferably no left-handed screw elements are to be used. Otherwise, the blend of raw materials to be used in accordance with the present invention results in blocking of the extruder.

The weighted average total strain (WATS) is a common parameter (see e.g. Pinto, et al., Polymer Engineering & Science 1970, 10 (5), 279-288.; Tucker et al., Chemical Engineering Science 1981, 36 (11), 1829-1839). The WATS is affected by the screw configurations, degree of filling (10 - 100 %), residence time (10 to 360 s), and screw speeds from 50 to 1500 rpm.

Surprisingly, it was found that a vegan cheese product produced by the process of the present invention had favorable characteristics as compared to a vegan cheese product produced by a conventional method such as described in WO 2021/113985 A1. In particular, according to the present invention it is possible to form more homogeneous products than in the state of the art, with higher fat levels if desired. Moreover, the present invention provides for a continuous process that can be transferred to industrial scale production more easily.

Extruders are generally known in the art. Reference is made, for example, to WO 2012/158023 A1 or to the extruders, in particular twin-screw extruders, from Bühler. Such extruders preferably have an L/D ratio (total length to screw diameter) in the range from 20 to 60, preferably 25 to 50, and particularly preferably 25 to 40. According to the invention, the extruders are preferably operated at 100 to 1000 rpm, more preferably at 200 to 600 rpm, and particularly preferably 250 to 350 rpm.

A suitable extruder comprises at least one unit for inserting material in a first section of the extruder. If different raw materials are to be introduced into the extruder, more than one such unit may be provided. The extruder typically also has a water feed line, an oil feed line and optionally a steam feed line.

Through said water feed line, water is introduced into the extruder, preferably into a first barrel housing.

Through said oil feed line, oil is introduced into the extruder, preferably into a first barrel housing. In case fats are used which are solid at ambient temperature, these fats are first liquefied (molten) in a suitable vessel by heating under conventional conditions, and then introduced into the extruder via said oil feed line.

The extruder comprises several sections, so-called barrel housings, in which material is processed and conveyed with the aid of at least one rotating screw. The screw elements used in the different barrel housings may be the same, but preferably are different in order to establish different processing conditions in the barrel housings.

According to a preferred embodiment of the present invention, the extruder comprises 4 to 10, preferably 4 to 8 barrel housings. The required number of barrel housing depends on the blend of raw materials to be processed.

The housing of the extruder is preferably temperature controlled. The composition is kneaded under pressure (usually 1 to 60 bar, preferably 8 to 20 bar, and particularly preferably 10 to 15 bar) to form a homogeneous blend. This usually involves an energy input of 10 to 150 Wh/kg, preferably 10 to 120 Wh/kg, more preferably 15 to 30 Wh/kg.

According to a preferred embodiment of the present invention, at the exit of the extruder, there is provided a cooling die. Cooling dies for extruders are sufficiently known. The extrudate enters the cooling die through the exit of the extruder.

According to a preferred embodiment of the present invention, the cooling die is a long cooling die, i.e. it has a length (defined as the length of a product flow channel through the die) that exceeds its width (defined as the longest dimension of a planar section vertically to the product flow channel).

In a further preferred embodiment, the cooling die may be a die that shapes the extrudate into desired shapes, for example cheese slides that can be used for burger meals such as cheese-burgers.

According to the present invention, shaping of the product can also be realized by extruding the extrudate into a respective mold having the desired shape, and perform conventional post-processing steps like compressing and/or cooling the product in the mold.

Preferably, a distributor unit is provided between the extruder exit and the cooling die. Said distributor unit provides for a uniform distribution of the extrudate exiting from the extruder exit to the one or more extrudate flow channels in the cooling die. Especially preferred, said distributor unit is releasably arranged so as to be exchangeable.

Preferably, the distributor unit comprises a distribution element preferably designed as a cone. The design of said distribution element as a circular cone is particularly advantageous. It is also possible to design the distribution element as a truncated cone, in particular as a truncated circular cone. In the case of a cone or circular cone design, the distribution element can also be realized with a spherical section-shaped tip, whereby the flow behavior can be specifically influenced and adapted to the extrudate. The back pressure into the extruder can be influenced and the extent of shear of the product can be affected. The distribution element is preferably inserted in a recess of the distributor unit and is held in position in this recess by the pressure of the product flowing against the distribution element; interchangeability is particularly easy in this way.

In a preferred embodiment of the present invention, in the process according to the present invention, a specific configuration of screw elements is used, e.g**.** in order to realize low strain conditions of 300-1200 WATS preferably a configuration in which no kneading block screw elements and no reverse screw elements are used. Preferably, no left-handed screw elements are to be used. Otherwise, the blend of raw materials to be used in accordance with the present invention results in blocking of the extruder. Otherwise, typically used screw elements can be used according to the present invention.

In a first step of the process of the present invention, the required raw materials are metered into the extruder, through the unit for inserting material described above. For starch-containing products, preferably a starch pre-blend is produced by mixing the desired starch components, and optionally additives such as xanthan gum. Said starch pre-blend is then added to the raw materials, or alternatively added into the extruder along with the raw materials.

As described above, the water required for the manufacture of the vegan cheese product of the present invention is introduced into the extruder through a separate water feed line, preferably into a first barrel housing.

As furthermore described above, the oil required for the manufacture of the vegan cheese product of the present invention is introduced into the extruder through a separate oil feed line, preferably into a first barrel housing. As also described above, if the oil required for the manufacture of the vegan cheese product of the present invention is a fat that is solid at ambient temperature, said fat is first liquefied (molten) by heating in a vessel conventionally used for said purpose. Preferably, heating at around 60°C is applied. The liquefied (molten) fat may be stored in a pre-heated tank (preferably also held at around 60°C).

According to a preferred embodiment of the present invention, the raw materials comprise zein protein. Zein is a storage protein from maize (corn). It is usually manufactured as a powder from corn gluten meal and belongs to the class of prolamin. Zein typically has a molecular weight in the range of from 20 to 30 kDa, preferably, 22 to 25 kDa, composed of a high amount of hydrophobic amino acids, such as glutamine, leucine, proline and alanine, e.g. greater than 50% hydrophobic amino acid content. Food-grade zein is commercially available for example from FloZein or AF Suter. It is, however, possible to use in the process of the present invention less refined corn gluten meal having a protein content of about 60-70% and comprising glutenin in addition to zein.

According to this preferred embodiment of the present invention, an amount of 5-50 wt.-%, preferably 10-40 wt.-%, and more preferably 15-35 wt.-% zein protein is used, based on the entire amount of the raw materials.

According to this preferred embodiment of the present invention related to a zein-containing blend of raw materials (i.e. composition), 0-50 wt.-% of at least one component that provides a fat phase mimicking the thermal behavior of milk fat, preferably a vegetable oil is used. Examples of suitable fats or oils include, but are not limited to sunflower oil, canola oil, safflower oil, soybean oil, avocado oil, olive oil, corn oil, flaxseed oil, almond oil, coconut oil, peanut oil, pecan oil, cottonseed oil, algal oil, palm oil, palm stearin, palm olein, palm kernel oil, rice bran oil, sesame oil, butter oil, cocoa butter, grape seed oil, hazelnut oil, brazil nut oil, linseed oil, acai palm oil, passion fruit oil, walnut oil, shea butter, shea stearin, shea olein, palm kernel stearin, palm kernel olein, and mixtures thereof.

Preferably, a combination of a saturated and an unsaturated fat or oil is used, preferably in a ratio of 5:1 to 2:1, more preferably 3:1. Such a combination resembles the content of saturated and unsaturated fats or oils in dairy cheese.

According to a very preferred embodiment of the present invention, it is possible to include a relatively high amount of said fat or oil into the vegan cheese product. As compared to the formulation disclosed in WO 2021/113 985 A1 where 30% zein were used together with only 1.5 % fat, with the process according to the present invention it is possible to insert an amount of fat oil into the vegan cheese product that is in the range from 10-50 wt.-%, preferably 20-40 wt.-% and more preferably 25-35 wt.-%, based on the entire amount of the raw materials. This makes the vegan cheese products of the present invention resembling the composition of dairy cheese products more than conventional vegan cheese products, but also can be used for controlling the functionality of the vegan cheese product of the present invention. It is believed that increasing the fat content of the vegan cheese products of the present invention reduces zein-zein protein interactions and thus makes the product less hard and less brittle. This results in a more homogeneous product as compared to prior art products with improved stability (e.g. less oil leakage out of the product)

The preferred composition of the present invention that comprises zein may furthermore comprise starch, but this is not required. Examples of starches suitable in this preferred embodiment of the present invention include, but are not limited to, starches such as arrowroot, cornstarch, katakuri starch, potato starch, sago, wheat flour, almond flour, tapioca and starch derivatives; or modified or pre-gelatinized starches. Tapioca starch has a unique viscoelasticity upon gelatinization. Its ability to gelatinize into a stretchy malleable mass is known and used in many cheese alternatives currently on the market. Corn starch may also interfere with the formation of zein-zein protein interactions and thus be used for controlling the functionality of the vegan cheese product of the present invention. It is thus preferred to use a combination of tapioca starch and corn starch, preferably in a ratio from 2:1 to 3:1.

If used, a starch component may be present in an amount in the range from 1-10 wt., preferably 2-5 wt.-%, based on the entire amount of the raw materials.

The preferred composition of the present invention that comprises zein may furthermore comprise a gelling or thickening agent, such as a hydrocolloid. Preferably, said gelling or thickening agent is selected from the group consisting of microbial and vegetable gums such as alginin, guar gum, locust bean gum, gellan gum, tara gum, Arabic gum, Konjac and xanthan gum. If used, a gelling or thickening agent may be present in an amount in the range from 0.1-5 wt.-%, preferably 0.2-2 wt.-%, based on the entire amount of the raw materials.

The preferred composition of the present invention that comprises zein may furthermore comprise a surfactant. Any surfactant commonly used in vegan cheese products may be used for the purposes of the present invention. The surfactant should be food-approved. As an example, lecithin may be mentioned. If used, a surfactant may be present in an amount in the range from 0.1-5 wt., preferably 0.2-2 wt.-%, based on the entire amount of the raw materials.

The preferred composition of the present invention that comprises zein may furthermore comprise additional additives such as acids or calcium salts, so as to adjust the pH value of the composition, preferably to a pH value from 4.0 to 8.0. Acids such as acetic acid, citric acid, lactic acid or glucono-delta lactone may be used. As calcium salts, conventional salts such as calcium chloride or calcium lactate may be used. If used, a surfactant may be present in an amount in the range from 0.1-5 wt.-%, preferably 0.2-3 wt.-%, based on the entire amount of the raw materials.

The preferred composition of the present invention that comprises zein may furthermore comprise an additional protein for disrupting zein-zein protein interactions and thus controlling the functionality of the vegan cheese product of the present invention. Suitable proteins are soy protein, pea protein, gluten, glutelin, protein from algae, recombinant caseins/ whey proteins, potato protein, sunflower protein, or faba bean protein. The amount of additional proteins to be used in said composition may vary greatly, depending on the desired functionality of the vegan cheese product of the present invention. According to a preferred embodiment, said additional protein is present in an amount from 0-50 wt.-%, preferably 5-30 wt.-%, and more preferably 10-20 wt.-%, based on the entire amount of the raw materials.

The remaining portion of the preferred composition of the present invention that comprises zein is water, in such an amount that the sum of all components is 100%. Preferably, the amount of water may be in a range from 30-70 wt.-%, based on the entire amount of the raw materials.

According to a preferred embodiment of the present invention, the raw materials have a total solids content of from 30-70 %, preferably 35 - 70 %, more preferably 40-65 %, based on the entire amount of the raw materials.

According to another embodiment of the present invention, the blend of raw materials, i.e. the composition, does not comprise zein protein, but is based on starch and fat/oil.

It has been found that the process according to the present invention is also favorable for preparing such compositions.

In said zein-free composition, starch is present in a higher amount, from 5-50 wt.-%, preferably 10-40 wt.-%, and more preferably 15-35 wt.-%, based on the entire amount of the raw materials. The same types of starch as described above for the zein-containing composition may be used.

According to this preferred embodiment of the present invention related to a zein-free composition, 0-50 wt.-% of at least one component that provides a fat phase mimicking the thermal behavior of milk fat, preferably a vegetable oil is used. Examples of suitable fats or oils include, but are not limited to sunflower oil, canola oil, safflower oil, soybean oil, avocado oil, olive oil, corn oil, flaxseed oil, almond oil, coconut oil, peanut oil, pecan oil, cottonseed oil, algal oil, palm oil, palm stearin, palm olein, palm kernel oil, rice bran oil, sesame oil, butter oil, cocoa butter, grape seed oil, hazelnut oil, brazil nut oil, linseed oil, acai palm oil, passion fruit oil, walnut oil, shea butter, shea stearin, shea olein, palm kernel stearin, palm kernel olein, oleosomes, and mixtures thereof.

Preferably, a combination of a saturated and an unsaturated fat or oil is used, preferably in a ratio of 5:1 to 2:1, more preferably 3:1. Such a combination resembles the content of saturated and unsaturated fats or oils in dairy cheese.

According to a very preferred embodiment of the present invention, it is possible to include a relatively high amount of said fat or oil into the vegan cheese product. As compared to the formulation disclosed in WO 2021/113 985 A1 where 30% zein were used together with only 1.5 % fat, with the process according to the present invention it is possible to insert an amount of fat oil into the vegan cheese product that is in the range from 10-50 wt., preferably 20-40 wt.-% and more preferably 25-35 wt.-%, based on the entire amount of the raw materials. This makes the vegan cheese products of the present invention resembling the composition of dairy cheese products more than conventional vegan cheese products.

The preferred zein-free composition of the present invention may furthermore comprise a gelling or thickening agent. Preferably, said gelling or thickening agent is selected from the group consisting of microbial and vegetable gums such as alginin, pectin, guar gum, locust bean gum, gellan gum, tara gum, Arabic gum, Konjac and xanthan gum. If used, a gelling or thickening agent may be present in an amount in the range from 0.1-5 wt., preferably 0.2-2 wt.-%, based on the entire amount of the raw materials.

The preferred zein-free composition of the present invention may furthermore comprise a surfactant. Any surfactant commonly used in vegan cheese products may be used for the purposes of the present invention. The surfactant should be food-approved. As an example, lecithin may be mentioned. If used, a surfactant may be present in an amount in the range from 0.1-5 wt., preferably 0.2-2 wt.-%, based on the entire amount of the raw materials.

The preferred zein-free composition of the present invention may furthermore comprise additional additives such as acids or calcium salts, so as to adjust the pH value of the composition, preferably to a pH value from 4.0 to 8.0. Acids such as acetic acid, citric acid, lactic acid or glucono-delta lactone may be used. As calcium salts, conventional salts such as calcium chloride or calcium lactate may be used. If used, a surfactant may be present in an amount in the range from 0.1-5 wt., preferably 0.2-3 wt.-%, based on the entire amount of the raw materials.

The preferred zein-free composition of the present invention may furthermore comprise an additional protein. Suitable proteins are soy protein, pea protein, gluten, glutelin, protein from algae, recombinant caseins/ whey proteins, potato protein, sunflower protein, or faba bean protein. The amount of additional proteins to be used in said composition may vary greatly, depending on the desired functionality of the vegan cheese product of the present invention. According to a preferred embodiment, said additional protein is present in an amount from 0-50 wt.-%, preferably 5-30 wt.-%, and more preferably 10-20 wt.-%, based on the entire amount of the raw materials.

The remaining portion of the preferred composition of the present invention that comprises zein is water, in such an amount that the sum of all components is 100%. Preferably, the amount of water may be in a range from 30-70 wt.-%, based on the entire amount of the raw materials.

According to a preferred embodiment of the present invention, the raw materials of the zein-free composition have a total solids content of from 30-70 %, preferably 35 - 70 %, more preferably 40-65 %, based on the entire amount of the raw materials.

Preferably, any of the above compositions may be supplemented with a flavorant in order to adjust the taste and smell of the vegan cheese product as desired. Flavorants may include salt, sugars such as dextrose, spices, herbs and the like. Flavorants may also include cheese powders and/or cheese flavors that mimic flavors that result from the breakdown of casein or of lipid/fat degradation in natural cheese, and may include casein peptides and amino acids that provide a salty, sour, bitter or sweet taste, and free fatty acids such as butyric, lactic and capric acids which provide characteristic cheese flavor. Enzyme-modified cheese flavor may also be used to provide a stronger flavor.

Preferably, any of the above compositions may also be supplemented with a colorant in order to adjust the color of the vegan cheese product as desired. Any food-approved colorant may be used for that purpose.

In the extruder, mixing and processing of said raw materials takes place in step b) of the process of the present invention.

The main aspect of step b) of the process of the present invention is the application of specific extrusion conditions. It has been found that different qualities of vegan cheese products, in particular based on zein protein, could be obtained by applying strain conditions of 300-3000 WATS, preferably 1000 to 3000 WATS, in the extruder. According to a preferred embodiment, to realize low strain conditions of 300-1200 WATS the use of kneading block screw elements and reverse screw elements in the extruder should be avoided. It has been found that the compositions to be used according to the present invention, i.e. the blend of raw materials, especially the composition comprising zein protein, result in blocking of the extruder when processed with a conventional screw configuration using both left-handed and right-handed screw elements in conventional numbers, in order to perform mixing and kneading operation under high shear forces. These specific blends of raw materials require specific processing conditions in the extruder.

Surprisingly, in a preferred embodiment of the present invention when the raw materials were being processed in an extruder with only left-handed screw elements, the compositions to be used according to the present invention, i.e. the blend of raw materials, could not only be processed into vegan cheese products at all, but into vegan cheese products having improved characteristics over vegan cheese products that are manufactured by a conventional method as described in WO 2021/113985 A1.

In the extruder, conventional processing conditions may be applied. The extruder screws may be operated at 100 to 1000 rpm, more preferably at 200 to 600 rpm, and particularly preferably 250 to 350 rpm. An energy input of 10 to 150 Wh/kg, preferably 20 to 60 Wh/kg, is preferably applied in step b) of the process of the present invention.

During step b) of the process of the present invention, the temperature in the extruder may be set to 50 to 180°C, preferably 60 to 90°C. However, it has been found that a vegan cheese product, especially a zein-containing vegan cheese product, with improved characteristics may be obtained when said temperature is in a range of from 60 to 70°C.

The extrudate produced in step b) of the process of the present invention is extruded from the extruder in the form of a melt, typically into a suitable mold.

As described above, according to a preferred embodiment of the present invention the extrudate may be introduced from the extruder exit into a cooling die, where it may be cooled to a desired temperature, preferably below 100 °C.

The desired vegan cheese product may be obtained by cooling the extrudate, preferably in a mold of a desired shape. After being filled with said molten extrudate, the mold may be put into a cooling room, or into a cooling unit such a mold/cooling tunnel or a refrigerator, and preferably cooled to a temperature in the range of from 0°C to 20°C, preferably 0°C to 10°C, more preferably 1°C to 5°C, until the extrudate is completely solidified.

After the extrudate has been solidified, it can be removed from the mold as the desired vegan cheese product. Optionally, it can be processed into a desired shape, for example by shredding.

The process of the present invention provides a vegan cheese product having improved characteristics. Thus, the present invention is also related to a vegan cheese product, obtainable by the process according to the present invention.

The vegan cheese product according to the present invention is obtained from the blend of raw materials (i.e. compositions) described above.

Preferably, the vegan cheese product according to the present invention has a total solids content of from 30-70 %, preferably 35 - 70 %, more preferably 40-65 %.

Preferably, the vegan cheese product according to the present invention contains 5-50 wt.-%, preferably 15-45 wt.%, more preferably 30-40 wt.-% zein protein, based on the entire weight of the product.

Preferably, the vegan cheese product according to the present invention contains 5-50 wt.-%, preferably 15-45 wt.%, more preferably 30-40 wt.-% of at least one starch, based on the entire weight of the product.

Preferably, the vegan cheese product according to the present invention contains 0-50 wt.-%, preferably 10-40 wt.-%, more preferably 20-30 wt.-%, of at least one component that provides a fat phase mimicking the thermal behavior of milk fat, preferably a vegetable oil, based on the entire weight of the product.

Preferably, the vegan cheese product according to the present invention comprises a surfactant, preferably lecithin.

Preferably, the vegan cheese product according to the present invention comprises 5-50 wt.-%, preferably 15-45 wt.%, more preferably 30-40 wt.-% of at least one additional protein, based on the entire weight of the product.

It has been found that the vegan cheese product of the present invention, in particular the zein-containing vegan cheese product, exhibits good meltability comparable to dairy cheese, as well as good stretchability comparable to dairy cheese. Due to the manufacturing process applied, it is easily possible to adjust the amount of e.g. the protein and the fat components in the vegan cheese product, so as to resemble the composition of dairy cheese as closely as possible.

According to a preferred embodiment, the vegan cheese product according to the present invention has an anisotropic (degree of fibrous structure) index between 0.9 to 5.2, as determined by tensile testing. The said product preferably has a hardness from 0 to 8 kg, preferably an elasticity from 0.50 to 0.90, preferably a gumminess from 0 to 2.5 kg, and preferably a chewiness from 0 to 1 kg, as determined by two-bite compression testing (texture profile analysis). The complex viscosity is determined by oscillatory rheology (small amplitude oscillatory strain method). The complex viscosity of the said product is preferably in the range from 10² to 10⁵ Pas, depending on temperature (20 - 90 °C). Thermo-rheological behavior of said vegan cheese products according to the present invention is described by oscillatory rheology with temperature sweeps. The melting of fat phase dominates the storage (G') and loss modulus (G'') between 0 to 40 °C like milk fat usually does. At higher temperatures plasticization starts and thus, flowability (tan delta) increases to maximum values of preferably from 0.6 to 3.0. Plasticization and thus, flow starts from 60 to 100 °C, depending on the respective raw materials used.

The storage modulus (G') and the loss modulus (G") can be determined using RheoCompass software and firmware (Anton Paar, Graz, Austria). The tan 6 value (G"/G') can be calculated therefrom.

The present invention will be described hereinafter in more detail by reference to non-limiting examples and drawings.

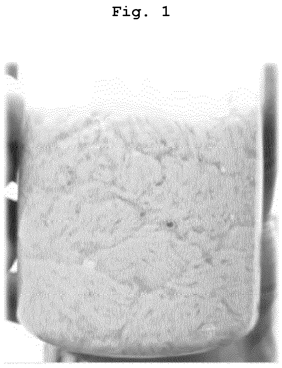

- Fig. 1: shows a photograph of a vegan cheese product obtained according to comparative example 1.
- Fig. 2: shows a photograph of a vegan cheese product obtained according to example 1.

### Comparative Example 1

A composition as described in table 1 was provided.

| **Component** | **Amount (wt.-%)** |
|---|---|
| Zein protein | 30 |
| Oil (mixture of sunflower and coconut oil) | 18.7 |
| Tapioca starch | 1.9 |
| Corn starch | 0.9 |
| Xanthan gum | 4.2 |
| Lecithin | 2 |
| Water | 42.3 |

The oils were melted on a stove in a pan under medium heat and mixed together. The powdered ingredients were whisked together in a separate bowl. Then the water was heated up on the stove to 85°C, and then the powdered ingredients were added to the water, followed by the oil, and were mixed with an immersion hand blender. Creating a homogeneous mixture was quite challenging, due to the highly hydrophobic nature of the zein protein. At room temperature, the product became very hard and gum-like, as can be seen from example 1

The sample was very difficult to remove from the mold and extremely hard and brittle.

### Example 1

The same composition as in comparative example 1 was used. In example 1, instead of heating on a kitchen stove, the materials were inserted into an extruder (BCTL (42 mm)). A pre-blend of the starches and the xanthan gum was prepared with a conventional mixer and inserted into the material inlet of the extruder, along with the zein protein and the lecithin.

The oils (which were melted before on a stove top and mixed) and the water were inserted into the extruder through separate injection lines, into the first barrel housing of the extruder.

In the extruder, low strain conditions of 300-1200 WATS, around 300 rpm and 33.5 Wh/kg were applied. Temperature was increased along the extruder length from 60°C to 65°C.

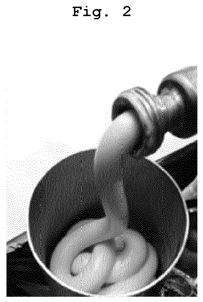

The obtained product had very good flow properties, as can be seen in Fig. 2. The sample was placed into a mold and allowed to cool for 1-2 h at room temperature. The resulting product was less brittle than the sample produced according to comparative example 1. The sample of example 1 could be sliced, and when a slice was heated on a stovetop, it nicely melted.

## Claims

1. A process for preparing a vegan cheese product, comprising the steps:
a) Metering raw materials into an extruder, preferably a twin-screw extruder, said raw materials comprising 5-50 wt.-% starch, 0-50 wt.-% of at least one component that provides a fat phase mimicking the thermal behavior of milk fat, preferably a vegetable oil, and 30-70 wt.-% water, wherein all amounts are based on the entire amount of the raw materials, and optionally an additive selected from the group consisting of a plasticizer, a surfactant, and acid, a calcium salt, and combinations thereof,
b) Mixing and processing said raw materials in said extruder,
c) Extruding the resulting extrudate so as to obtain the vegan cheese product, wherein in said extruder strain conditions of 300-3000 WATS, preferably 1000 to 3000 WATS, and a temperature in the range from 50-180°C are applied.

2. The process according to claim 1, **characterized in that** the raw materials have a total solids content of from 30-70 %, preferably 35 - 70 %, more preferably 40-65 %, based on the entire amount of the raw materials.

3. The process according to any of claims 1 to 2, **characterized in that** the extruder comprises 4 to 10 barrel housings.

4. The process according to any of claims 1 to 3, **characterized in that** a cooling die provided at the extruder exit.

5. The process according to any of claims 1 to 4, **characterized in that** an energy input of 10 to 150 Wh/kg, preferably 20 to 60 Wh/kg, is applied in step b).

6. A vegan cheese product, obtainable by the process according to any of claims 1 to 5, wherein the product has a total solids content of from 30-70 %, preferably 35 - 70 %, more preferably 40-65 %, and the product contains 5-50 wt.-%, preferably 15-45 wt.%, more preferably 30-40 wt.-% at least one starch, based on the entire weight of the product, and the product contains 0-50 wt.-%, preferably 10-40 wt.-%, more preferably 20-30 wt.-%, of at least one component that provides a fat phase mimicking the thermal behavior of milk fat, preferably a vegetable oil, based on the entire weight of the product.

7. The vegan cheese product according to claim 6, **characterized in that** the product comprises a surfactant, preferably lecithin.

8. The vegan cheese product according to claim 6 or 7, **characterized in that** the product comprises 5-50 wt.-%, preferably 15-45 wt.%, more preferably 30-40 wt.-% of at least one additional protein, based on the entire weight of the product.
